# EUROPEAN PATENT SPECIFICATION

(11) **EP 2 491 067 B1**
(45) Date of publication and mention of the grant of the patent: **09.09.2015**
(21) Application number: 10774318.9
(22) Date of filing: 18.10.2010
(51) Int. Cl.: C08G 63/183, C08J 5/18

(54) **RADIO-FREQUENCY SEALABLE POLYMER AND ARTICLES THEREOF**
PER FUNKFREQUENZ SIEGELFÄHIGES POLYMER UND ARTIKEL DAMIT
POLYMÈRE SCELLABLE PAR RADIOFRÉQUENCE ET ARTICLES ASSOCIÉS

(30) Priority: 19.10.2009 US 252891 P; 18.10.2010 US 906270
(43) Date of publication of application: 29.08.2012
(73) Proprietor: Eastman Chemical Company, Kingsport, TN 37660 (US)
(72) Inventor: SHIH, Wayne, Ken, Kingsport TN 37664 (US); MOORE, Jennifer, Deanne, Kingsport TN 37663 (US); SHANG, Ping, Peter, Kingsport TN 37660 (US)
(74) Representative: Ricker, Mathias
(86) International application number: PCT/US2010/002775
(87) International publication number: WO 2011/049611

(56) References cited:
- WO-A1-2010/110876
- US-A- 5 059 470
- US-A- 5 310 787
- US-A- 5 484 632

## Description

The present invention broadly relates to a method of sealing a film of a reactor-grade copolyester composition by radio-frequency More particularly, the copolyester composition has a particular degree of crystallinity wherein a film prepared from the polymer exhibits radio-frequency sealing capability.

In the packaging industry, traditionally, a "clamshell blister package" refers to a plastic package formed from a pair of layers of thermoformable plastic. An article to be packaged is retained between the layers. Typically, the layers, which may be one-piece, are hinged along a common edge and are sealed. Well-known sealing techniques include, for example, heat application, use of chemical adhesives, and radio frequency sealing ("RF-sealing"). The terms "sealing", "activating", "bonding", "seaming" and "welding" (and variations thereof) are used interchangeably herein. Other packages may require sealing besides those having clamshell parts, such as two-piece packages.

In many packaging applications, RF-welding is the preferred technique to seal the package. As opposed to heat sealing, the nature of RF-welding will make the temperature highest at the interface of the two plastic films. Thus, RF-welding can bond a film in a fraction of the time required for conventional heating-bonding methods. Second, a RF-seal is less likely to degrade thermally sensitive material, such as oriented films and thermally sensitive dyes, than the conventional heat-bonding method. Third, bonding complex shapes is possible using RF-welding with minimal difficulty relative to conventional heat-bonding methods. As used herein, the term "RF active" means a material susceptible to dielectric activation via energy in the RF range which induces rapid heating of the material. "RF sealability" and "RF welding" refers to bonding of a sealable polymer to a portion of itself or to another RF sealable material using electromagnetic energy or waves in the RF range. i.e., generally a broad frequency range of 0.1-300 MHz, with typical sealing apparatus operating in the frequency range of from 15-28 MHz and particularly generally at about 27.12 MHz.

The layers for RF-sealable packages are usually composed of polyvinyl chloride (PVC), at least in part because this material is easily RF-sealed. Products manufactured from flexible PVC enjoy a long history of use in a variety of end use applications, not only those items or articles that rely upon PVC RF sealing capability, but also those directed to vapor or gas barriers, and packaging flexibility. Concerns about the environmental impact of halogenated polymers such as PVC, particularly during their manufacture and disposal, spark efforts to develop halogen-free alternatives. The packaging industry in recent times has attempted to move away from the use of PVC packaging material, as it is perceived as less environmentally friendly than other possible materials. For example, the European market has searched for a number of years for an alternative material to PVC, due to Europe's propensity to incinerate waste. One such alternative material is polyethylene terephthalate (PET), a common type of polyester.

Although not to bound by any theory, it is believed that his inability for PET to form an effectively RF-seal is attributed, in part, to PET crystallinity. It is believed the heat causes an increase in crystallinity at the seal location relative to the adjacent PET. The specific volume of PET decreases as the crystallinity of the PET increases, causing the two polymer surfaces to pull away from the newly entangled interface, weakening the strength of the bond. As such, it has been difficult to provide a thermoformable PET plastic material for packaging due to the inability to effectively RF-seal the material.

Accordingly, there is a need to provide an improved RF-sealable, packaging material to replace PVC. Efforts to counter the concerns tend to focus upon olefin polymers such as polypropylene (PP), polyethylene (PE), styrenic block copolymers such as styrene/ethylene butene/styrene or (SEBS), and ethylene copolymers such as ethylene/octene-1 or ethylene/vinyl acetate (EVA) copolymers. The olefin polymers match or approximate many physical properties exhibited by PVC and do so at a comparable cost. However, a problem with films formed from such polymers is that they require the use of heat sealing since they have too low a dielectric loss factor to facilitate RF sealing.

Various halogen-free polymers with dielectric properties that permit RF-sealing include polymers, for example, thermoplastic polyurethane (TPU), and glycol modified polyester (PETG). However, these polymers cost more than PVC, making direct substitution for PVC economically unattractive. In addition, some alternate RF active polymers have a significantly higher tensile modulus or stiffness than PVC, making substitution in flexible film packaging or bag applications inapplicable.

Copolyamides, known to be RF active, suffer drawbacks in terms of inadequate physical properties and high cost relative to PVC. High number average molecular weight (Mₙ) polyamides, also known as nylon, generally have a high enough modulus to classify them as stiff relative to PVC, but both are difficult to seal and expensive.

U.S. Patent Nos. 6,855,778 and 7,003,930 disclose a blend of two polyesters having from 5-50 weight % of a glycolized polyester (PETG) and from 50-95 weight % PET. These patents teach that a film or packaging container made from the polyester blend exhibits RF-sealability comparable to PVC. However, the amount of comonomer in the PETG is not disclosed. Another problem with forming such a blend is that amorphous PETG has a much lower fusion temperature than semicrystalline PET so that when the two compounds at their respective drying temperatures are added to an extruder at the prescribed weight ratios, the PETG agglomerates causing feeding problems, inconsistent blend ratios and in many cases terminating extruder function. The blends disclosed by these patents are distinguished from applicant's inventive reactor grade copolyesters. The term "reactor grade" polyester, as used herein, is understood to mean a random, polyester produced by the reaction of monomers to form oligomers and reaction of the oligomers to form the polyester in one or more reactors, as is well-known and understood by persons skilled in the art. Typically, reactor grade polyesters are prepared by the polyesterification of dicarboxylic acids and diols and provide more consistent properties than polyester blends. With respect to the inventive copolyesters, the terms "reactor-grade copolyester", "copolyester" and "copolyester composition" are used interchangeably.

Accordingly, it is clear that there is still a need for an improved thermoformable packaging material capable of RF-sealability that is an alternative to PVC packaging.

A further goal is to reduce the environmental impact upon the disposal of an article fabricated from a film or sheet comprising the copolyester of the present invention. For those articles that are disposed of in landfills, it is desirable to use as little material as possible. Further benefits are realized by using a copolyester which may be recycled by thermoplastically reprocessing the post-consumer article into other useful articles. Thus, there is an additional need to provide a process for manufacturing an RF-sealable copolyester for packaging that provides perceived environmental benefits similar to that of PET from containers for soft drink or water, i.e., is capable of satisfactory recycling, is cost effective and provides RF-sealing capabilities comparable to PVC.

These needs and others are addressed by the present RF-sealable and heat-sealable copolyesters and packaging materials made therefrom, which provides environmental and other benefits of PET, with sealing benefits comparable to PVC. More specifically, the present invention relates to a method for making an article of manufacture as defined in claims 1 to 7.

The reactor grade copolyester composition disclosed in the present invention is thermoformable and capable of forming a RF-sealable packaging material, allowing the sealing benefits of certain materials, such as PVC, without the environmental drawbacks typically associated with PVC. Specifically, the reactor grade copolyester composition is a copolyester comprising: (A) an acid residue moiety comprising: (1) greater than 70 mole % terephthalic acid; and (2) from 0 to 30 mole % of a modifying acid selected from the group consisting of isophthalic acid, adipic acid, azelaic acid, succinic acid, naphthalenedicarboxylic acid, cyclohexanedicarboxylic acid, and mixtures thereof; and (B) a diol residue moiety comprising: (1) from 75 to 95 mole % ethylene glycol; and (2) from 5 to 25 mole % of a modifying diol selected from the group consisting of 1,4-cyclohexanedimethanol, diethylene glycol, neopentyl glycol, and mixtures thereof. It is important to the present invention that the copolyester composition have a crystallinity defined by a minimum crystallization half time (t_{1/2 min}) of from 1.5 to 30 minutes. One skilled in the art will understand that the above mole ratio for the acid moiety is 100 mole percent based on the sum of the mole percentages of component (A) and the mole ratio for the diol moiety is 100 mole percent based on the sum of the mole percentages of component (B).

In alternative embodiments, the reactor grade copolyester composition of the present invention comprises an acid residue moiety wherein the acid residue moiety is greater than 80 mole % terephthalic acid, or greater than 90 mole % terephthalic acid.

The diol component (B) of the copolyester includes from 5 to 25 mole % of a modifying diol selected from the group consisting of 1,4-cyclohexanedimethanol, diethylene glycol, neopentyl glycol, and mixtures thereof. In an alternative embodiment, the amount of modifying diol is from 6 to 20 mole %, or from 6 to 12 mole percent. Desirably, the modifying diol is selected from of 1,4-cyclohexanedimethanol (CHDM) and diethylene glycol with CHDM being preferred.

The amount of modifying acid and diol comonomers can be independently adjusted within the aforementioned ranges, provided the resultant copolyester has a minimum crystallization half-time (t_{1/2 min}) of from 1.5 to 30 minutes. It is further expressly understood and part of this specification that the ranges specified herein include all numerical ranges in between and that such ranges have not been expressly written in this specification for the sake of brevity.

The copolyesters are readily prepared using melt phase or solid state polycondensation procedures described in greater detail in U.S. Pat. Nos. 4,256,861, 4,539,390, and 2,901 ,466.

The copolyester may be made by batch or continuous processes and include preparation by direct condensation or by ester exchange.

Briefly, a typical procedure comprises at least two distinct stages; the first stage, known as ester-exchange or esterification, is conducted under an inert atmosphere at a temperature of 150°C to 250°C for 0.5 to 8 hours, or from 180°C to 240°C for 1 to 4 hours. The glycols, depending on their reactivities and the specific experimental conditions employed, are commonly used in molar excesses of 1.05-2.5 per total moles of acid-functional monomers. The second stage, referred to as polycondensation, is conducted under reduced pressure at a temperature of 230°C to 350°C, or 265°C to 325°C, or 270°C to 300°C for 0.1 to 6 hours, or 0.25 to 2 hours. Stirring or appropriate reaction conditions are used in both stages to ensure adequate heat transfer and surface renewal of the reaction mixture. The reactions of both stages are facilitated by appropriate catalysts, especially those well-known in the art, such as alkoxy titanium compounds, alkali metal hydroxides and alcoholates, salts of organic carboxylic acids, alkyl tin compounds, metal oxides, and combinations thereof.

The reactor grade copolyester composition may be directly fed to a sheet forming die or pelletized. The pellets may then undergo solid-state polymerization, depending upon the desired end use. Solid-state polymerization is a process well known in the art. For example, U.S. Pat. No. 4,064, 112, describes a typical solid-state process. In this process, amorphous precursor pellets that have been prepared by melt phase polymerization are first crystallized at a temperature 10°C-100°C below their melt temperature (crystallization phase) and then further held at a temperature of at least 10°C below their melt temperature for a sufficiently long time, e.g., 2-40 hours, in the presence of either vacuum or dry nitrogen to increase their IV (solid stating phase). These high temperatures are required to allow polymerization to proceed at a relatively rapid and economical rate. At these high temperatures, amorphous pellets would soften and fuse together into a highly viscous block. In contrast, crystalline pellets will not stick together at these temperatures. Thus, solid state polymerization can only be performed on crystallized pellets.

Generally when molding grade pellets are produced, either a batch or continuous process is used. In a batch process, pellets are added to a large container heated according to the two stage process described above. The container is continuously rotated to provide uniform heating of the pellets, and to prevent sticking of the pellets to the container walls during the initial crystallization. In a continuous process, the pellets first drop by gravity into a crystallizer unit, and then flow by gravity through a large heated container which builds the IV. Continuous processes are preferred for commercial operations for reasons of economics. Normally, in solid stating pellets having a copolyester composition in accordance with the present invention, particles of regular or irregular shape may be used. The particles may be of various shapes and sizes such as spherical, cubical, irregular, cylindrical, and shapes which are generally flat.

It is often observed during solid stating polymerization processing that the rate of inherent viscosity increase may slow with time. Thus, the maximum IV that can be obtained may be limited by the initial IV of the precursor material. For this reason, the IV for the copolyesters described in this invention should be from 0.4 and 0.9 dL/g, or from 0.6 and 0.85 dL/g, or from 0.65 and 0.8 dL/g. The inherent viscosities of the copolyesters of this invention are determined in a 60/40 (wt./wt.) phenol/tetrachloroethane at a concentration of 0.5 g/100 ml as determined at 25°C.

The reactor grade copolyester composition may further include one or more conventional additives that impart a functional attribute to the final product, but do not significantly detract from RF-sealability. Such additives include, but are not limited to, antioxidants, branching agents, process stabilizers, ultraviolet (UV) stabilizers, tackifiers, fire retardants, inorganic fillers, biocides, and pigments.

Branching agents useful in the context of the invention can be ones that provide branching in the acid unit portion of the polyester, or in the glycol unit portion, or it can be a hybrid. Illustrative of such branching agents are compounds comprising at least three functional groups selected from hydroxyl, carboxyl, carboxylic anhydride, and mixtures thereof. Examples include tri- or tetra-carboxylic acids and their corresponding anhydrides, such as trimesic acid, pyromellitic acid and lower alkyl esters thereof and the like, and tetrols such as pentaerythritol. Also triols such as trimethylolpropane or dihydroxy carboxylic acids and hydroxydicarboxylic acids and derivatives, such as dimethyl hydroxy terephthalate, and the like are useful within the context of this invention. Trimellitic acid or anhydride is a preferred branching agent.

These branching agents may be added directly to the polyester either during or after their preparation, or blended with the polyester in the form of a concentrate as described in U.S. Patent Nos. 5,654,347 and 5,696,176. The branching agents may used in an amount ranging from 0.05 to 1.5 weight percent, based on the total weight of the polyester composition.

Another aspect is a RF-weldable film structure comprising the reactor grade copolyester. The films or sheet may be of any gauge that serves a given need, but typically fall within a range of from 1 to 100 mils (25 to 2500 micrometers), or 5 to 30 mils (125 to 750 micrometers). Any conventional film forming process may be used to fabricate such films. Illustrative processes include, without limitation, an annular extruded blown film process, a slot die cast extrusion film process, and extrusion coating of one or more layers upon a film or substrate.

The films can be monolayer films or function as one or more layers of a multi-layer film construction. The RF active copolyester can be coextruded, or otherwise assembled into a multi-layer composite, with a non-RF active or weakly RF active polymer layer. The incorporation of a RF active layer with a non-RF active layer into a coextruded film structure desirably allows the entire film to be RF welded. Film structures can be denoted as "AB" or "ABA" wherein the "A" layer is the RF active film and the "B" layer is the non-RF active polymer. Skilled artisan readily understands that these structures merely illustrate a wide variety of foreseeable structures

Additionally, RF active copolyester composition can be fabricated into extruded profile shapes such as tubing. For example, a RF-weldable monolayer or coextruded, multi-layer, tubular structure may be bonded to a film or other substrate to fabricate a composite part such as a medical collection bag.

Any of the films can be sealed or welded to itself using a conventional RF sealer. Commercially available RF welders, such as those available from Callanan Company, Kabar, Alloyd, Thermatron, Weldan, Colpitt, Kiefel Technologies, Radyne and others, typically operate at a frequency of 27.12 MHz. Two less frequently used radio frequencies are 13.56 MHz and 40.68 MHz. When using RF sealers, the die or tooling can operate at ambient room temperature (nominally 23°C) or can be preheated to temperatures typically from 40°C to 100° C. Slightly elevated temperatures can eliminate arcing, improve RF activation and reduce seal time.

In accordance with another aspect, the films of the present invention can be fabricated into a variety of structures susceptible to RF-sealing or heat-sealing. In a process of forming a packaging material one or more sheets are extruded from the RF sealable copolyester composition using a typical polyester extrusion process. The sheet or sheets are then thermoformed to create a desired shape for a packaging material. For example, a film can be folded over and at least partially RF sealed to itself to form a bag or a pouch. Two plies of the same film readily form a bag or pouch without a fold. Other suitable articles of manufacture include, but are not limited to, containers, packages, automotive interior trim fabrics, flotation devices, tarps, tent coverings, medical collection bags, medical ostomy bags, medical infusion or intravenous bags, air mattresses, toys, food packaging, retail product blister packaging, and tubing.

With minor adjustment, if any, thermoformable plastic sheets comprised of the reactor grade, thermoformable, RF-sealable copolyester can be RF-sealed together in an RF-sealing process that may be typically used for, for example, PVC material. In an example of such sealing process, an article of manufacture comprising thermoforming the RF-weldable film structure disclosed in the present invention is thermoformed into a shape having first and second edges. The first and second edges are folded or placed in an overlapping position. The edges are RF-welded or sealed together by subjecting the overlapping edges to an RF-sealing energy.

For most applications, sufficient RF sealing or bonding equates to an adhesive strength, which is different from the break energy described in the examples, of at least 4 pounds per inch (lb/in) (0.72 Newton per millimeter (N/mm)). Medical collection bags or drainage pouches require that an RF weld between two plies of film have a strength that exceeds tear strength of the film itself. In other words, an effort to peel the films apart results in tearing at least one of the films. An RF weld or seal adhesive strength of at least 4 lb/in (0.72 N/mm), as tested by the 180 degree peel test of ASTM D-903, meets this requirement. Thicker film structures, such as those used for inflatable applications, generally require even greater weld or bond strengths. As discussed above, the films may be monolayer or multi-layer, whereby articles made from these films would also be monolayer or multi-layered articles.

The present invention is illustrated in greater detail by the specific examples presented below. It is to be understood that these examples are illustrative embodiments and are not intended to be limiting of the invention, but rather are to be construed broadly within the scope and content of the appended claims.

In the examples below, the copolyesters were prepared in accordance with known practices in the polyester art. The amounts of comonomers for each copolyester are specified in the respective example. The resultant copolyesters were then formed into films having an average thickness of 0.457 mm (18 mils).

Crystallization halftimes are measured using a Perkin-Elmer Model DSC-2 differential scanning calorimeter. A sample of 10.0 mg of each sample was sealed in an aluminum pan and heated at a rate of 320°C/min to 290°C and held for 2 minutes in a helium atmosphere. The sample was then cooled immediately at a rate of 320°C/min to an isothermal crystallization temperature ranging from 140°C to 200°C with a 10°C interval. The crystallization halftime at each temperature is then determined as the time needed to reach the peak on the exothermic curve. The minimum crystallization half-time is the temperature where the crystallization rate was the fastest.

When tested, the peel strength of the seal was conducted by sealing a film using Kabar 10 kW RF sealer using a 1 second presealing time, 3.5 second sealing time, and 0.1 second cooling time at 80 psi platen pressure and 180°F die temperature. The bond strength of each sealed sample was measured with the T-peel resistance method according to ASTM D-1876. The samples were conditioned at 70°C and 50% relative humidity for 24 hours. The width of the sample was 1 inch and the testing speed was 1 inch per minute using an Instron tensile tester. The break energy, reported in inchpound force (in-lbf), is determined by calculating the area under the load versus displacement curve.

The amount of monomer utilized in the following examples, although expressed in mole %, one skilled in the art will understand that monomers may contain from 3 to 5 mole % of a secondary monomer. For example, 100 mole % ethylene glycol may contain up to 5 mole % diethylene glycol, (DEG), depending upon the process, use of recycle, and other parameters. However, DEG is not purposely added.

### COMPARATIVE EXAMPLE 1

A copolyester having 100 mole % terephthalic acid, 96.5 mole % ethylene glycol and 3.5 mole % CHDM was prepared. The resulting polymer had an I.V. of 0.72 dL/g and a minimum half-time crystallization (t_{1/2 min}) of 65 seconds. The copolyester formed an RF weld having a break energy of 170 N.mm (1.5 in-lbf).

### COMPARATIVE EXAMPLE 2

A copolyester having 100 mole % terephthalic acid, 95.5 mole % ethylene glycol and 4.5 mole % CHDM was prepared. The resulting polymer had an I.V. of 0.73 dL/g and a minimum half-time crystallization (t_{1/2 min}) of 85 seconds. The copolyester formed an RF weld having a break energy of 260 N.mm (2.3 in-lbf).

### EXAMPLE 3

A copolyester having 100 mole % terephthalic acid, 94 mole % ethylene glycol and 6 mole % CHDM was prepared. The resulting polymer had an I.V. of 0.71 dL/g and a minimum half-time crystallization (t_{1/2 min}) of 163 seconds. The copolyester formed an RF weld having a break energy of 362 N.mm (3.2 in-lbf).

### EXAMPLE 4

A copolyester having 100 mole % terephthalic acid, 92 mole % ethylene glycol and 8 mole % CHDM was prepared. The resulting polymer had an I.V. of 0.72 dL/g and a minimum half-time crystallization (t_{1/2 min}) of 200 seconds. The copolyester formed an RF weld having a break energy of 520 N.mm (4.6 in-lbf).

### EXAMPLE 5

A copolyester having 100 mole % terephthalic acid, 88 mole % ethylene glycol and 12 mole % CHDM was prepared. The resulting polymer had an I.V. of 0.68 dL/g and a minimum half-time crystallization (t_{1/2 min}) of 517 seconds. The copolyester formed an RF weld having a break energy of 520 N.mm (4.6 in-lbf).

### COMPARATIVE EXAMPLE 6

A copolyester having 97 mole % terephthalic acid, 3 mole % isophthalic acid, and 100 mole % ethylene glycol was prepared. The resulting polymer had an I.V. of 0.71 dL/g and a minimum half-time crystallization (t_{1/2 min}) of about 26 seconds. The copolyester formed an RF weld having a break energy of 147 N.mm (1.3 in-lbf).

### COMPARATIVE EXAMPLE 7

A copolyester having 89 mole % terephthalic acid, 11 mole % isophthalic acid, and 100 mole % ethylene glycol was prepared. The resulting polymer had an I.V. of 0.77 dL/g and a minimum half-time crystallization (t_{1/2 min}) of 115 seconds. The copolyester formed an RF weld having a break energy of 508 N.mm (4.5 in-lbf).

### COMPARATIVE EXAMPLE 8

A copolyester having 100 mole % terephthalic acid, 69 mole % ethylene glycol and 31 mole % CHDM was prepared. The resulting polymer had an I.V. of 0.70 dL/g. The minimum half-time crystallization (t_{1/2 min}) was too long to be measured. The copolyester formed an RF weld having a break energy of 655 N.mm (5.80 in-lbf).

### EXAMPLE 9

A copolyester having 100 mole % terephthalic acid, 80 mole % ethylene glycol and 20 mole % CHDM was prepared. The polymer further contained 0.3 weight % of trimellitic anhydride (TMA) as a branching agent to improve the melt strength of the polyester. The resulting polymer had an I.V. of 0.68 dL/g and a minimum half-time crystallization (t_{1/2 min}) of 1644 seconds. The copolyester formed an RF weld having a break energy of 497 N.mm (4.40 in-lbf). The branching agent may slow the interfusion molecular mobility during sealing but still good enough seal strength.

### COMPARATIVE EXAMPLE 10

Multiple blends were prepared having from 5-50 weight % clear amorphous PETG having 31 mole % CHDM and 90 weight % semicrystalline PET were attempted. Polyesters have to be dried prior to melt processing or severe IV degradation will occur due to high moisture content. A semicrystalline PET is normally dried at 300°F while an amorphous PETG is typically dried at 150°F. The two materials were mixed together at their respective drying temperatures before fed into the hopper of the extruder. The pellets of the amorphous PETG clump up quickly as soon as they are blended with the PET pellets and prevent feeding to an extruder.

### Thermoforming Window

A branching agent, such TMA improved the melt strength of the polyester. The thermoforming window of a branched polymer can be increased by reducing or minimizing sheet sagging and webbing in a hot oven. Samples from Examples 8 and 9 were used to demonstrate the concept. The sheet dimensions were 13 inches x 21.5 inches x 0.020 inches. The oven temperature was kept constant at 550°F and the sheet temperature was monitored by an infrared pyrometer. The sheet temperature was controlled by the time the sheet spent in the oven. A multi-cavity mold was used to establish the thermoforming window of each material. The Lower Sheet Temperature describes the lowest sheet temperature that still provided good detail in the part. The Upper Sheet Temperature is the highest sheet temperature that showed no evidence of webbing in the part. The thermoforming window describes the range of temperatures at which a sheet produces good thermoformed parts. It is calculated by taking the difference between the Upper and Lower Sheet Temperatures. The Thermoforming Window for each material is shown in Table 1 below.

**Table 1**

| | Ex. 8 | Ex. 9 |
|---|---|---|
| Lower sheet temp. °C | 167 | 154 |
| Upper sheet temp. °C | 178 | 196 |
| Thermoforming window, °C | 11 | 42 |

The Thermoforming Window of branched copolyester polymers, shown in Table 1, is almost quadruple that of non-branched polymers.

### Heat Sealability

Certain embodiments of the current invention are intended for use in not only RF sealing but also in heat sealing. Three samples, as shown in Table 2 below, were used to illustrate the improvement in heat sealability. Films were prepared from the polyesters of Examples 5 and 8 and a 50/50 weight % blend of the polyester of Example 5 and another polymer having 100 mole % terephthalic acid, 63 mole % ethylene glycol and 37 mole % diethylene glycol with an I.V. of 0.72 dL/g. A Thellar heat sealer was used. The sealing conditions were 40 psi pressure, 1/2 inch square seal area, 3 second dwell time and a seal thickness of 24 mils. The seal temperature ranged from 200°F to 300°F. The sealability was determined by using the heat seal initiation temperature (HSIT) which is the sealing temperature where 200 grams of force is needed to breach the seal. A material is not heat sealable if a HSIT cannot be reached under an acceptable sealing cycle and temperature range. A polyester composition having a lower HSIT is usually a better material for heat sealing due to less energy, shorter cycle time, and less crystallinity for semi-crystalline polymers. The HSIT results of the three samples are shown in Table 2 below.

**Table 2**

| Sample | HSIT °C |
|---|---|
| Ex. 5 | 240 |
| Ex. 8 | 230 |
| 50/50 Blend | 200 |

### Recycle and Compatibility with PET

It is desirable to reclaim and reuse the regrind or scrap of an RF-sealable polyester sheet produced during extrusion and thermoforming. Twenty-five percent PCR content is a commercial minimum target for sustainability. The term "PCR content" means polyethylene terephthalate (PET) content. The criterion for compatibility is that the melt temperature of the resulted blend is over the threshold about 235°C. The extruded sheet may incorporate over 25 weight % post-consumer recycle (PCR) content in monolayer or multi-layer structures. The copolyesters of Examples 3-5 can easily accommodate 25 weight % of PCR content. Surprisingly, the polyesters of Examples 3-5 can be introduced into a PET recycle stream at levels exceeding 50% without upsetting the process or performance. The amount of the copolyester of the invention that may be added into a PCR stream is provided in Table 3 below.

**Table 3**

| Copolyester | CHDM mole% | Tm °C | Regrind wt. % | PCR wt. % | Tm, °C Blend |
|---|---|---|---|---|---|
| Ex. 1 | 3.5 | 239 | 100% | 0% | -- |
| Ex. 2 | 4.5 | 237 | 100% | 0% | -- |
| Ex. 3 | 6 | 231 | 70% | 30% | 235 |
| Ex. 4 | 8 | 229 | 60% | 40% | 235 |
| Ex. 5 | 12 | 224 | 50% | 50% | 234 |
| Ex. 9 | 20 | 205 | 25% | 75% | 234 |

Having described the invention in detail, those skilled in the art will appreciate that modifications may be made to the various aspects of the invention without departing from the scope and spirit of the invention disclosed and described herein. It is, therefore, not intended that the scope of the invention be limited to the specific embodiments illustrated and described but rather it is intended that the scope of the present invention be determined by the appended claims and their equivalents.

## Claims

1. A method for making an article of manufacture comprising:
thermoforming a film comprising a reactor grade copolyester comprising:
(A) an acid residue moiety comprising:
(1) greater than 70 mole % terephthalic acid; and
(2) from 0 to 30 mole % of a modifying acid selected from the group consisting of isophthalic acid, adipic acid, azelaic acid, succinic acid, naphthalenedicarboxylic acid, cyclohexanedicarboxylic acid, and mixtures thereof, and
(B) a diol residue moiety comprising,
(1) from 75 to 95 mole % ethylene glycol; and
(2) from 5 to 25 mole % of a modifying diol selected from the group consisting of 1,4-cyclohexanedimethanol, diethylene glycol, neopentyl glycol, 2,2,4,4-tetramethylcyclobutane-1,3-diol, isosorbide and mixtures thereof,
wherein the copolyester has a crystallinity defined by a minimum crystallization half time (t_{1/2} min) of from at least 1.5 to 30 minutes, the measurement method of the crystallization half time being defined in the description, and wherein the sum of the mole percentages of component (A) are based on 100 mole percent of the acid residue moiety and the sum of the mole percentages of component (B) are based on 100 mole percent of the diol residue moiety,
into a shape having first and second edges, placing said first and second edges in an overlapping position and, sealing said first and second edges together by subjecting the overlapping edges to an RF (radio frequency)-sealing energy using electromagnetic energy in a frequency range of from 0.1 to 300 MHz.

2. The method of claim 1 wherein the film thickness is 0.0254 to 2.54 mm (1 to 100 mils).

3. The method of claim 2 wherein the film thickness is 0.127 to 0.762 mm (5 to 30 mils).

4. The method of any of claim 1 to 3 wherein said film is a monolayer structure.

5. The method of any of claims 1 to 3 wherein said film is a multi-layer structure.

6. The method of any one of claims 1 to 5, wherein said modifying diol comprises from 6 to 12 mole % of 1,4-cyclohexanedimethanol.

7. The method of any of claims 1 to 6, wherein the copolyester further comprises a branching agent.

## Patentansprüche

1. Verfahren zur Herstellung eines Herstellungsgegenstands umfassend:
Thermoformen eines Films umfassend einen Copolyester mit Reaktorqualität umfassend:
(A) eine Einheit eines Säurerests umfassend:
(1) mehr als 70 Mol-% Terephthalsäure; und
(2) 0 bis 30 Mol-% einer modifizierenden Säure ausgewählt aus der Gruppe bestehend aus Isophthalsäure, Adipinsäure, Azelainsäure, Bernsteinsäure, Naphthalindicarbonsäure, Cyclohexancarbonsäure, und Mischungen davon, und
(B) eine Einheit eines Diolrests umfassend:
(1) 75 bis 95 Mol-% Ethylenglykol; und
(2) 5 bis 25 Mol-% eines modifizierenden Diols ausgewählt aus der Gruppe bestehend aus 1,4-Cyclohexandimethanol, Diethylenglykol, Neopentylglykol, 2,2,4,4-Tetramethyl-1,3-cyclobutanediol, Isosorbid und Mischungen davon,
wobei der Copolyester eine Kristallinität aufweist definiert durch eine minimale Kristallisationshalbwertszeit (t_{1/2min}) von mindestens 1,5 bis 30 Minuten, wobei die Messmethode der Kristallisationshalbwertszeit in der Beschreibung definiert ist, und wobei die Summe der Mol-% der Komponente (A) auf 100 mol-% der Einheit der Säurereste basiert, und die Summe der Mol-% der Komponente (B) auf 100 Mol-% der Einheit der Diolreste basiert,
in eine Form, welche erste und zweite Kanten aufweist, Anordnen der ersten und zweiten Kanten in eine überlappende Position und Verkleben der ersten und zweiten Kanten miteinander durch Unterziehen der überlappenden Kanten einer RF (Radiofrequenz)-Verklebungsenergie unter Verwendung einer elektromagnetischen Energie in einem Frequenzbereich von 0,1 bis 300 MHz.

2. Verfahren nach Anspruch 1, wobei die Filmdicke 0,0254 bis 2,54 mm (1 bis 100 mil) beträgt.

3. Verfahren nach Anspruch 2, wobei die Filmdicke 0,127 bis 0,762 mm (5 bis 30 mil) beträgt.

4. Verfahren nach einem der Ansprüche 1 bis 3, wobei besagter Film eine Monoschichtstruktur aufweist.

5. Verfahren nach einem der Ansprüche 1 bis 3, wobei besagter Film eine Mehrschichtstruktur aufweist.

6. Verfahren nach einem der Ansprüche 1 bis 5, wobei besagtes modifizierendes Diol 6 bis 12 Mol-% 1,4-Cyclohexandimethanol aufweist.

7. Verfahren nach einem der Ansprüche 1 bis 6, wobei der Copolyester weiter ein Verzweigungsmittel aufweist.

## Revendications

1. Procédé de fabrication d'un article manufacturé comprenant :
le thermofaçonnage d'un film comprenant un copolyester de qualité réacteur comprenant :
(A) une moitié de résidu acide comprenant :
(1) plus de 70 % en mol d'acide téréphtalique ; et
(2) de 0 à 30 % en mol d'un acide de modification choisi dans le groupe constitué de l'acide isophtalique, l'acide adipique, l'acide azélaïque, l'acide succinique, l'acide naphtalènedicarboxylique, l'acide cyclohexanedicarboxylique, et des mélanges de ceux-ci, et
(B) une moitié de résidu de diol comprenant
(1) de 75 à 95 % en mol d'éthylèneglycol ; et
(2) de 5 à 25 % en mol d'un diol de modification choisi dans le groupe constitué de 1,4-cyclohexanediméthanol, de diéthylèneglycol, de néopentylglycol, de 2,2,4,4-tétraméthylcyclobutane-1,3-diol, d'isosorbide et de mélanges de ceux-ci,
dans lequel le copolyester présente une cristallinité définie par une demi-vie de cristallisation minimale (t_{1/2min}) d'au moins 1,5 à 30 minutes, le procédé de mesure de la demi-vie de cristallisation étant défini dans la description, et dans lequel la somme des pourcentages molaires du constituant (A) est basée sur 100 pourcents en mole de la moitié de résidu acide et la somme des pourcentages molaires du constituant (B) est basée sur 100 pourcents en mole de la moitié de résidu de diol,
en une forme présentant des premier et second bords, la disposition desdits premier et second bords dans une position de chevauchement et, le scellement desdits premier et second bords ensemble en soumettant les bords de chevauchement à une énergie de scellement par RF (radiofréquence) utilisant une énergie électromagnétique dans un intervalle de fréquence de 0,1 à 300 MHz.

2. Procédé selon la revendication 1, dans lequel l'épaisseur de film est de 0,0254 à 2,54 mm (1 à 100 millièmes de pouce).

3. Procédé selon la revendication 2, dans lequel l'épaisseur de film est de 0,127 à 0,762 mm (5 à 30 millièmes de pouce).

4. Procédé selon l'une quelconque des revendications 1 à 3, dans lequel ledit film est une structure monocouche.

5. Procédé selon l'une quelconque des revendications 1 à 3, dans lequel ledit film est une structure multicouche.

6. Procédé selon l'une quelconque des revendications 1 à 5, dans lequel ledit diol de modification comprend de 6 à 12 % en mol de 1,4-cyclohexanediméthanol.

7. Procédé selon l'une quelconque des revendications 1 à 6, dans lequel le copolyester comprend de plus un agent de ramification.
